# EUROPEAN PATENT SPECIFICATION

(11) **EP 3 273 365 B1**
(45) Date of publication and mention of the grant of the patent: **15.06.2022**
(21) Application number: 17179696.4
(22) Date of filing: 05.07.2017
(51) Int. Cl.: G06F 16/13

(54) **METHOD FOR GENERATING SEARCH INDEX AND SERVER UTILIZING THE SAME**
VERFAHREN ZUR ERZEUGUNG EINES SUCHINDEX UND SERVER DAFÜR
PROCÉDÉ DE GÉNÉRATION D'INDEX DE RECHERCHE ET SERVEUR L'UTILISANT

(30) Priority: 21.07.2016 TW 105123067
(43) Date of publication of application: 24.01.2018
(73) Proprietor: Avision Inc., Hsinchu 30077 (TW)
(72) Inventor: Lee, Hsin-Chen, Hsinchu 30077 (TW)
(74) Representative: Schlimme, Wolfram

(56) References cited:
- US-A1- 2007 136 340
- US-A1- 2011 238 669
- US-A1- 2011 252 018
- US-A1- 2012 323 902
- JUSTIN ZOBEL ET AL: "Inverted files for text search engines", ACM COMPUTING SURVEYS, ACM, NEW YORK, NY, US, US, vol. 38, no. 2, 25 July 2006 (2006-07-25), pages 6-es, XP058163155, ISSN: 0360-0300, DOI: 10.1145/1132956.1132959
- OTVIO A B PENATTI ET AL: "Comparative study of global color and texture descriptors for web image retrieval", JOURNAL OF VISUAL COMMUNICATION AND IMAGE REPRESENTATION, ACADEMIC PRESS, INC, US, vol. 23, no. 2, 10 November 2011 (2011-11-10), pages 359-380, XP028446498, ISSN: 1047-3203, DOI: 10.1016/J.JVCIR.2011.11.002 [retrieved on 2011-11-28]
- SUN-HWA HAHN ET AL: "A study on utilizing OCR technology in building text database", DATABASE AND EXPERT SYSTEMS APPLICATIONS, 1999. PROCEEDINGS. TENTH INT ERNATIONAL WORKSHOP ON FLORENCE, ITALY 1-3 SEPT. 1999, LOS ALAMITOS, CA, USA,IEEE COMPUT. SOC, US, 1 September 1999 (1999-09-01), pages 582-586, XP010352447, ISBN: 978-0-7695-0281-6
- Anonymous: "linux - TIFF to TEXT, or index TIFF files based on text content - Super User", , 25 April 2016 (2016-04-25), XP055792391, Retrieved from the Internet: URL:https://web.archive.org/web/2016042504 0055/https://superuser.com/questions/10411 14/tiff-to-text-or-index-tiff-files-based- on-text-content [retrieved on 2021-04-01]
- Anonymous: "Full Text Indexing | Document Locator", , 30 June 2016 (2016-06-30), XP055792405, Retrieved from the Internet: URL:https://web.archive.org/web/2016063001 4642/https://www.documentlocator.com/featu res/text-indexing.htm [retrieved on 2021-04-01]

## Description

### TECHNICAL FIELD OF THE INVENTION

The disclosure relates to a method for generating a search index and a server utilizing the same, and particularly to a distributed database and method for generating a search index thereof.

### BACKGROUND OF THE INVENTION

Cloud storage device or service is applied in the daily life more and more broadly. For example, Google Drive^{®} and Dropbox^{®} are both often-used cloud storage devices/services. Nowadays, one usually uploads digital documents such as text file, Microsoft document file, portable document format, etc. to his/her own cloud storage device.

However, as the occupied storage space is getting larger and larger, people tend to use more than one cloud storage device or service. It leads to a problem that when a user has many cloud storage devices, the user not necessarily saves the documents to a corresponding cloud storage device according to the category of each document. Hence, the user needs to pay much effort to search in each cloud storage device when he or she wants to find a document with a specific keyword from a plurality of cloud storage devices.

### PRIOR ART

US 2012/323902 A1 shows and describes a mobile terminal and file browsing method implemented by such a mobile terminal. The mobile terminal comprises a file reading and writing module, a scanning module, an indexing module, a browsing module and a searching module. The index module creates a global index list according to the related information of files scanned by the scanning module. The browsing module classifies and displays the files according to the file types in the global index list while searching a target file. Each index item in the index list includes a file name, a file path, an extension name, a file type and a file subtype of each file. A search is carried out by entering a keyword for which the search is carried out in the global index list. According to this known method different files stored in different directory trees of different storage media provided in said mobile terminal are scanned and index information is retrieved from these files. The scanning module acquires related information of a file including the file name, file path and extension name of the file, i.e. meta data of the document stored in a header portion of the respective document file. A global index list is created according to this acquired related information of each file. The indexing module creates an index item for every file according to the received related information of said file and the index items of all the files constitute the global index list. Each index item in the global index list includes the file name, file path, extension name, file type, file sub-type and other fields of the file, i.e. meta information of the file. Scanning and indexing content information from the content portion of a file are not known from this prior art.

US 2007/0136340 A1 shows and describes a document and file indexing system. An indexing application is running parallel to a data storing application so that a file index is generated during storing this file. The indexing application reads the file to be stored and processes it to parse the information to create an index. The metadata of the document or file are then added to the index, such as document name, size and so on.

US 2011/0252018 A1 discloses a system and a method for creating a search index on a cloud database. A cloud database stores and manages huge sets of data in a distributed manner. The data may be accessed via a cloud computing interface which may be provided on a user's computing device. The cloud database may include one or more document oriented databases which store documents in the form of key-value pairs. Each document is associated with a key which is a unique identification for each document in a particular database and the value represents the document in the same database. The indexing engine is an information retrieval software library which is employed for indexing of documents stored in the cloud database. The index generator is a software module which facilitates creating a search index on the cloud database. The index generator comprises a pre-processing module which facilitates the user to provide one or more inputs for creating multiple indexes on documents stored in the cloud database. These inputs may include a database name, a number of documents that are to be assigned, a single index, a directory path of a location in a database where the multiple indexes are to be stored.

US 2011/0238669 A1 describes a method and a system to search objects in published literature for information discovery tasks. In this method text is retrieved from full text articles by software interfaces adapted to the electronic media format or the content type of the respective document. These interfaces can be a HTML interface an XML interface, a PDF interface or a TIFF/OCR interface. The retrieved text is then analyzed by an object extractor module which extracts text from the document. A processing system analyses the objects drawn from the full text articles and identifies abstract passages of the extracted text and stores these abstracts in an abstracts repository. Other objects are stored in an objects records repository. Attributes to the objects and abstracts are linked via a database key with the objects and abstract records. An abstract/object output generator performs storing full text images and object images in an image repository and associated search/browse indexes of objects, abstracts and full-text in respective index databases. These search/browse indexes may be used by a search/browse service to facilitate the search and retrieval of stored objects. This method thus uses dedicated databases for full text images and object images as well as dedicated databases for search/browse indexes (objects, abstracts, full-text).

### SUMMARY OF THE INVENTION

It is an object of the present invention to provide a method for generating a search index which allows finding a document with specific keyword from a plurality of cloud storage devices. It is another object to provide a server which is enabled to carry out such a method. It is a further object of the invention to provide a search database which can be used with the method.

The object directed to the method is achieved by a method with the features of claim 1.

This method for generating a search index is applicable for a database system having a first database in a first cloud storage device and a second database in a second cloud storage device by a server communicating with the first database and the second database, said server comprising a non-volatile storage medium with a search database. The method includes the steps of: receiving, from a user, an access instruction corresponding to a first document, the access instruction indicating that the first document is to be saved in the first or the second database, analyzing the first document to obtain a plurality of first key character strings corresponding to the first document including the text content thereof, storing the first document into the first database or the second database according to the access instruction and generating a first address information corresponding to the first document, generating a first search index corresponding to the first document according to the first address information and the plurality of first key character strings, and storing the search index into the search database, separate from the first and second databases. The step of analyzing the first document to obtain a plurality of first key character strings corresponding to the text content of the first document comprises:
- when the first document is a text file, capturing contents of the text file to obtain the plurality of first key character strings and
- when the first document is an image file comprising text, performing an image recognition in the form of optical character recognition on the first document to generate the text contents of the first document and to obtain the plurality of first key character strings accordingly.

Further preferred and advantageous features of the method according to the invention are claimed in subclaim 2.

An advantageous embodiment of the method comprises the steps of receiving, from the first database, a writing information corresponding to a second document; capturing, from the first database, according to the writing information, the second document being a text file or an image file comprising text; analyzing the second document to obtain a plurality of second key character strings corresponding to the second document including the text content thereof; generating, according to the writing information, a second address information corresponding to the second document; and generating, according to the second address information and the plurality of second key character strings, a second search index corresponding to the second document.

The object directed to the server is achieved by a server with the features of claim 3.

A server applicable for communicating with a first cloud-based database in a first cloud storage device and a second cloud-based database in a second cloud storage device via the Internet comprises a processor and an access controller. The processor is configured for analyzing a first document being a text file or an image file comprising text to obtain a plurality of first key character strings corresponding to the text content of the first document receiving an access instruction corresponding to the first document. The processor is further configured to determine whether the first document is a text file, and when the first document is not a text file but an image file comprising text, the processor performs an image recognition process in the form of optical character recognition on the first document to generate a text file of the first document, and the processor captures text contents of the generated text file of the first document to obtain the plurality of first key character strings. The access controller communicates with the processor, the first database and the second database, and is configured for writing the first document to the first database or the second database according to the access instruction, and for generating first address information corresponding to the first document. The processor further generates a first search index corresponding to the text content of the first document with the first address information and the plurality of first key character strings, wherein the generation of the first search index with the first key character strings is based on the text content of the first document, and a non-volatile storage medium provided with a search database configured for storing the first search index corresponding to said first document.

Further preferred and advantageous features of the server according to the invention are claimed in subclaims 4 and 5.

Preferably the server comprises an image capturing device communicating with the processor and used for capturing an image of a paper document to generate the first document.

In another preferred embodiment of the server, wherein when the first database sends a writing information corresponding to a second document being a text file or an image file comprising text to the server, the processor determines whether the second document is written into the first database by the processor, and when the second document is not written by the processor, the processor captures the second document from the first database via the access controller, and the processor analyzes the text content of the second document to obtain a plurality of second key character strings corresponding to the text content of the second document, and the processor further generates a second address information according to the writing information and generates a second search index corresponding to the second document according to the second address information and the plurality of second key character strings.

The object directed to the search database is achieved by a search database with the features of claim 6.

This search database comprises a non-volatile storage medium for storing a first search index corresponding to the text content of a first document, wherein the first search index comprises: at least one key character string corresponding to the text content of said first document; and a first address corresponding to a first database where the first document is stored; wherein the first database is different from the search database. The incorporation of at least one key character string corresponding to the content of a document into the first search index allows a faster search to be carried out than with the prior art search databases.

A further preferred and advantageous feature of the search database according to the invention is claimed in subclaim 7.

Preferably, in the search database the non-volatile storage medium is further used for storing a first file arrangement table corresponding to the first database.

The invention is, according to claim 8, also directed to a database system comprising a first cloud-based database, a second cloud-based database and a server according to the present invention, said server being adapted for communicating with said first cloud-based database in a first cloud storage device and said second cloud-based database in a second cloud storage device via the internet according to the method of the present invention.

### BRIEF DESCRIPTION OF THE DRAWINGS

The present invention will become more fully understood from the detailed description given hereinbelow and the accompanying drawings which are given by way of illustration only and thus are not limitative of the present invention and wherein:
- FIG. 1: is a block diagram of a database system according to one embodiment of the disclosure;
- FIG. 2A: illustrates a flow of a method for generating a search index according to one embodiment of the disclosure;
- FIG. 2B: illustrates a flow of step S220 according to one embodiment of the disclosure; and
- FIG. 3: shows the architecture of a database system according to another embodiment of the disclosure.

### DETAILED DESCRIPTION OF PREFERRED EMBODIMENTS OF THE INVENTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

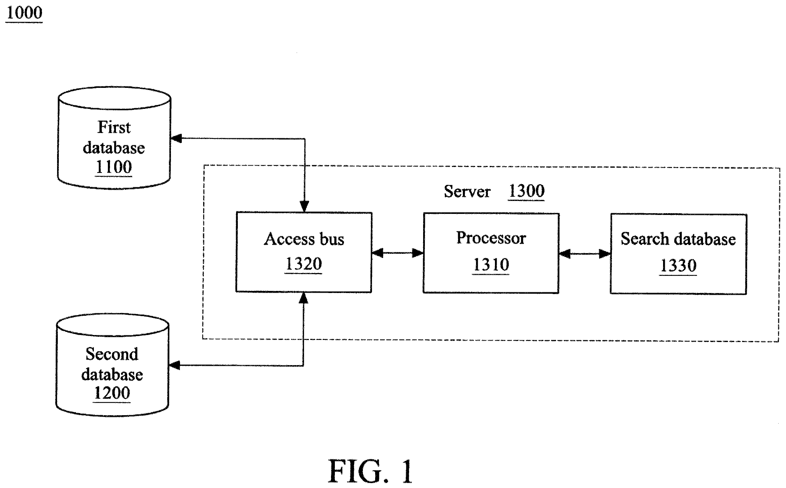

Please refer to FIG. 1, which is a block diagram of a database system according to one embodiment of the disclosure. As shown in FIG. 1, the database system 1000 in the embodiment includes a first database 1100, a second database 1200, and a server 1300. The server 1300 communicates with both of the first database 1100 and the second database 1200. Practically, the term "communicate with" means that there may be data transmitted/received between the server 1300 and the first database 1100 and/or the second database 1200.

The server 1300 includes a processor 1310, an access controller 1320 and a search database 1330. The access controller 1320 is electrically connected to the processor 1310. Further, the access controller 1320 communicates with the first database 1100 and the second database 1200. The processor 1310 accesses the first database 1100 and/or the second database 1200 via the access controller 1320. The search database 1330 communicates with the processor 1310.

The aforementioned database is a non-volatile storage device such as a physical hard disk, a disk array, a tape, a flash storage medium, etc. The aforementioned processor may be a central processing unit, a micro control unit, an advanced RISC machine (ARM), or other circuit having ability of signal processing, logic operation, and controlling electronic device.

In one embodiment, when the user wants to save a first document in the first database 1100, the first document is sent to the server 1300 first, and the access instruction indicates that the first document is to be saved in the first database 1100. Hence, before the processor 1310 writes the first document into the first database 1100 via the access controller 1320, the processor 1310 is capable of analyzing the first document to obtain the key character strings of the first document. In one embodiment, the key character strings include the file name of the first document.

Practically, the processor 1310 determines whether the first document is a text file. When the first document is not a text file, the processor 1310 performs an image recognition process on the first document to generate a text file of the first document, and captures the contents of the text file to obtain one or more first key character strings corresponding to the first document.

In the process determining whether the first document is a text file, in one embodiment, the processor 1310 determines directly based on the filename extension. More explicitly, when the filename extension of the first document is such as .doc, .xls, .ppt, .txt, etc., the first document is determined being a text file. When the filename extension of the first document is such as .pdf, .tif, .tiff, etc., the first document is determined not being a text file. When the processor 1310 needs to perform the image recognition process on the first document, the processor 1310 performs the Optical Character Recognition (OCR) on the first document to generate the text file thereof.

Then the processor 1310 stores the first document to the first database 1100 according to the access instruction, and the search index corresponding to the first document is stored in the search database 1330 of the server 1300. The search index includes the key character strings of the first document and the first address recording where the first document is stored. In this embodiment, the first address refers to the first database 1100. In some embodiments, the search index further includes the filename of the first document. In other embodiments, when the first document is not a text file, the text file corresponding to the first document by image recognition process is part of the search index of the first document. In other words, the text file of the first document is the backup file of the first document, so the user may check whether the first document is the needed document when the user is searching files.

In certain conditions, the first database 1100 is not receiving the file from the server 1300. Explicitly, the user directly stores a second document into the first database 1100 not via the server 1300. Hence, the server 1300 cannot build the search index corresponding to the second document. To solve this problem, the disclosure provides the following method.

In one embodiment, when the first database 1100 stores the second document, the first database 1100 informs the server 1300 with the writing information of the second document. When the server 1300 receives the writing information corresponding to the second document, the server 1300 captures the second document from the first database 1100 and performs the aforementioned flow for building the search index so as to build the second search index corresponding to the second document.

In another embodiment, the first database 1100 would not initiatively send the writing information of the second document to the server 1300. Then, the server 1300 periodically or casually checks the file arrangement table or file allocation table (FAT) of the first database 1100. For example, every time when the server 1300 writes a document to the first database 1100, the sever 1300 requests for the file arrangement table of the first database 1100. Hence, the processor 1310 may compare the current obtained file arrangement table of the first database 1100 with the previous obtained file arrangement table of the first database 1100. If the two file arrangement tables do not match with each other, the processor 1310 processes according to the current file arrangement table.

For example, if the current file arrangement table of the first database 1100 indicates that a third document is stored in the first database 1100, and the recorded file arrangement table of the first database 1100 does not have the record of the third document, the processor 1310 captures the third document from the first database 1100 and generates a third search index corresponding to the third document and refresh the recorded file arrangement table at the same time. If the recorded file arrangement table of the first database 1100 indicates that a fourth document is stored in the first database 1100 and the current file arrangement table of the first database 1100 does not include the data corresponding to the fourth document, the processor 1310 deletes the fourth search index corresponding to the fourth document from the search database 1330 and refreshes the recorded file arrangement table.

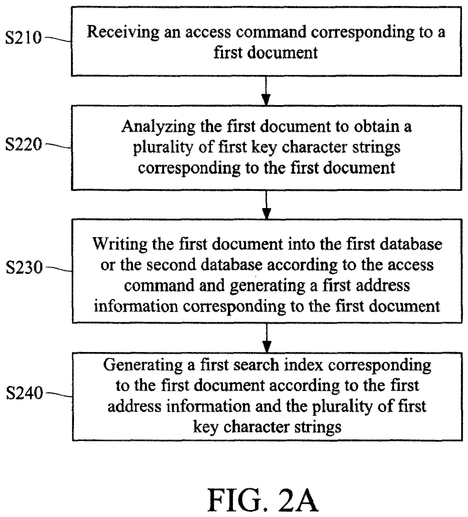

Therefore, please refer to FIG. 2A, which illustrates a flow of a method for generating a search index according to one embodiment of the disclosure. As shown in FIG. 2A, the method for generating a search index according to one embodiment of the disclosure includes the following steps: In step S210, an access instruction corresponding to the first document is received. In step S220, a plurality of first key character strings corresponding to the first document are obtained by analyzing the first document. In step S230, the first document is written into the first database or the second database according to the access instruction, and a first address information corresponding to the first document is generated. In step S240, a first search index corresponding to the first document is generated according to the first address information and the first key character strings.

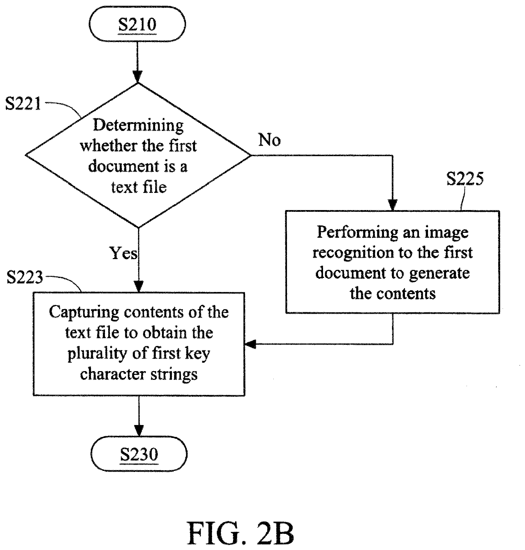

Further, please refer to FIG. 2B, which illustrates a flow of step S220 according to one embodiment of the disclosure. As shown in FIG. 2B, step S220 includes the sub-steps as following: step S221, it is determined whether the first document is a text file. When the first document is a text file, the step S223 is performed to capture the content of the text file to obtain one or more first key character strings. Otherwise, the step S225 is performed to perform an image recognition process on the first document to generate the text content of the first document. After the step S225 is performed, it goes back to the step S223. The flow goes to step S220 after the step S223 is performed.

When the user wants to search a specific document, the user may connect the server 1300 and search the specific keywords on the server 1300. The file name and access address, such as the first database 1100 or the second database 1200, of the documents with the specific keywords may be obtained from the search database 1330. Hence, the user needs not to search the specific file database by database.

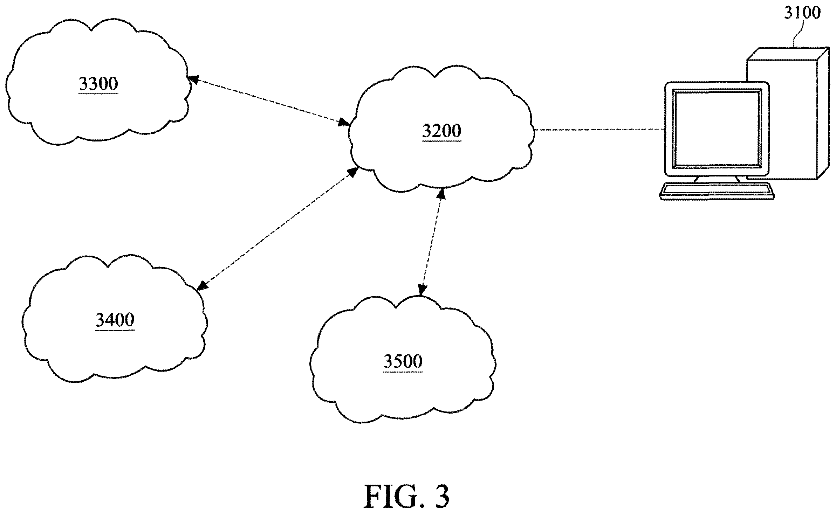

Please refer to FIG. 3, which is an architecture of a database system according to another embodiment of the disclosure. As shown in FIG. 3, the user may access the server 3200 via the terminal device 3100, and the architecture of the server 3200 is the same as the server 1300 in FIG. 1. The server 3200 records the first access key of the user to the first database 3300, the second access key of the user to the second database 3400, and the third access key of the user to the third database 3500. Each of the access keys, for example, includes the user identity and the password of the user, and the three access keys may be the same or different from each other. Hence, whether the user accesses the server 3200 or not, the server 3200 may access each of the databases periodically or from time to time. For example, when the server 3200 accesses the first database 3300, the server 3200 asks the first database 3300 for its file arrangement table. The server 3200 further checks the recorded file arrangement table in the server 3200 according to the file arrangement table of the first database 3300 so as to determine whether the files stored in the first database 3300 are the same as the record in the server 3200. Then, the recorded file arrangement table is refreshed accordingly, and the method is described above. In the embodiment, the server 3200 accesses each of the databases via the internet.

As above, when the document is stored into the database by the server, the information of the target database is taken as part of the search index of the document, so the user may quickly get which database the document with the specific keywords is stored in via the server. Additionally, the server may refresh the file arrangement table corresponding to the database periodically or from time to time so as to selectively refresh the search index.

## Claims

1. A method for generating a search index, applicable for a database system having a first database (1100; 3300) in a first cloud storage device and a second database (1200; 3400) in a second cloud storage device by a server (1300; 3200) communicating with the first database (1100; 3300) and the second database (1200; 3400), said server (1300; 3200) comprising a non-volatile storage medium with a search database (1330), wherein the method comprises:
- receiving, from a user, an access instruction corresponding to a first document, the access instruction indicating that the first document is to be saved in the first or the second database;
- analyzing the first document to obtain a plurality of first key character strings corresponding to the first document including the text content thereof;
- storing the first document into the first database (1100; 3300) or the second database (1200; 3400) according to the access instruction and generating a first address information corresponding to the first document;
- generating a first search index corresponding to the first document according to the first address information and the plurality of first key character strings; and
- storing the search index into the search database (1330), separate from the first and second databases (1100, 1200; 3300, 3400);
wherein the step of analyzing the first document to obtain a plurality of first key character strings corresponding to the text content of the first document comprises:
- when the first document is a text file, capturing contents of the text file to obtain the plurality of first key character strings and
- when the first document is an image file comprising text, performing an image recognition in the form of optical character recognition on the first document to generate the text contents of the first document and to obtain the plurality of first key character strings accordingly.

2. The method according to claim 1, further comprising:
- receiving, from the first database (1100; 3300), a writing information corresponding to a second document;
- capturing, from the first database (1100; 3300), according to the writing information, the second document being a text file or an image file comprising text;
- analyzing the second document to obtain a plurality of second key character strings corresponding to the second document including the text content thereof;
- generating, according to the writing information, a second address information corresponding to the second document; and
- generating, according to the second address information and the plurality of second key character strings, a second search index corresponding to the second document.

3. A server applicable for communicating with a first cloud-based database (1100; 3300) in a first cloud storage device and a second cloud-based database (1200; 3400) in a second cloud storage device via the internet according to the method of claim 1 or 2, wherein the server (1300; 3200) comprises:
- a processor (1310) configured for analyzing a first document being a text file or an image file comprising text to obtain a plurality of first key character strings corresponding to the text content of the first document when receiving an access instruction corresponding to the first document, wherein the processor (1310) further determines whether the first document is a text file, and when the first document is not a text file but an image file comprising text, the processor (1310) performs an image recognition process in the form of optical character recognition on the first document to generate a text file of the first document, and the processor (1310) captures text contents of the generated text file of the first document to obtain the plurality of first key character strings;
- an access controller (1320) communicating with the processor (1310), the first database (1100; 3300) and the second database (1200; 3400), and configured for writing the first document to the first database (1100; 3300) or the second database (1200; 3400) according to the access instruction, and for generating a first address information corresponding to the first document; wherein the processor (1310) further generates a first search index corresponding to the text content of the first document with the first address information and the plurality of first key character strings, wherein the generation of the first search index with the first key character strings is based on the text content of the first document, and
- a non-volatile storage medium provided with a search database (1330) configured for storing the first search index corresponding to said first document.

4. The server according to claim 3, further comprising an image capturing device communicating with the processor (1310) and used for capturing an image of a paper document to generate the first document.

5. The server according to claim 3, wherein when the first database (1100; 3300) sends a writing information corresponding to a second document being a text file or an image file comprising text to the server (1300; 3200), the processor (1310) determines whether the second document is written into the first database (1100; 3300) by the processor (1310), and when the second document is not written by the processor (1310), the processor (1310) captures the second document from the first database (1100; 3300) via the access controller (1320), and the processor (1310) analyzes the text content of the second document to obtain a plurality of second key character strings corresponding to the second document, and the processor (1310) further generates a second address information according to the writing information and generates a second search index corresponding to the second document according to the second address information and the plurality of second key character strings.

6. A search database (1330) in a server according to claim 3, the database comprising:
- a non-volatile storage medium configured to store a first search index generated by a method according to claim 1 or 2 and corresponding to the text content of a first document, wherein the first search index comprises:
- at least one key character string corresponding to the text content of said first document; and
- a first address corresponding to a first database where the first document is stored;
- wherein the first database (1100; 3300) is different from the search database (1330).

7. The search database (1330) according to claim 6, wherein the non-volatile storage medium is further used for storing a first file arrangement table corresponding to the first database (1100; 3300).

8. A database system (1000) comprising a first cloud-based database (1100), a second cloud-based database (1200) and a server (1300) said server being adapted for communicating with said first cloud-based database (1100; 3300) in a first cloud storage device and said second cloud-based database (1200; 3400) in a second cloud storage device via the internet according to the method of claim 1 or 2, wherein the server (1300; 3200) comprises the features of one of claims 3 to 5.

## Patentansprüche

1. Verfahren zum Erzeugen eines Suchindexes, anwendbar für ein Datenbanksystem mit einer ersten Datenbank (1100; 3300) in einer ersten Cloud-Speichervorrichtung und einer zweiten Datenbank (1200; 3400) in einer zweiten Cloud-Speichervorrichtung durch einen Server (1300; 3200), der mit der ersten Datenbank (1100; 3300) und der zweiten Datenbank (1200; 3400) kommuniziert, wobei der Server (1300; 3200) ein nichtflüchtiges Speichermedium mit einer Suchdatenbank (1330) umfasst, wobei das Verfahren umfasst:
- Empfang einer Zugriffsanweisung von einem Benutzer, die einem ersten Dokument entspricht, wobei die Zugriffsanweisung angibt, dass das erste Dokument in der ersten oder der zweiten Datenbank gespeichert werden soll;
- Analysieren des ersten Dokuments, um eine Vielzahl von ersten Schlüsselzeichenfolgen zu erhalten, die dem ersten Dokument einschließlich seines Textinhalts entsprechen;
- Speichern des ersten Dokuments in der ersten Datenbank (1100; 3300) oder der zweiten Datenbank (1200; 3400) gemäß der Zugriffsanweisung und Erzeugen einer ersten Adressinformation, die dem ersten Dokument entspricht;
- Erzeugen eines ersten Suchindexes, der dem ersten Dokument entspricht, gemäß der ersten Adressinformation und der Vielzahl der ersten Schlüsselzeichenfolgen; und
- Speichern des Suchindexes in der von der ersten und zweiten Datenbank (1100, 1200; 3300, 3400) separaten Suchdatenbank (1330);
wobei der Schritt des Analysierens des ersten Dokuments, um eine Vielzahl von ersten Schlüsselzeichenketten zu erhalten, die dem Textinhalt des ersten Dokuments entsprechen, umfasst:
- wenn das erste Dokument eine Textdatei ist, Erfassen des Inhalts der Textdatei, um die Mehrzahl der ersten Schlüsselzeichenfolgen zu erhalten, und
- wenn das erste Dokument eine Bilddatei ist, die Text enthält, Durchführen einer Bilderkennung in Form einer optischen Zeichenerkennung an dem ersten Dokument, um den Textinhalt des ersten Dokuments zu erzeugen und dementsprechend die Vielzahl der ersten Schlüsselzeichenfolgen zu erhalten.

2. Verfahren nach Anspruch 1 ferner umfassend:
- Empfangen einer einem zweiten Dokument entsprechenden Schreibinformation aus der ersten Datenbank (1100; 3300);
- Erfassen des zweiten Dokuments, das eine Textdatei oder eine Bilddatei mit Text ist, gemäß der Schreibinformation aus der ersten Datenbank (1100; 3300);
- Analysieren des zweiten Dokuments, um eine Vielzahl von zweiten Schlüsselzeichenfolgen zu erhalten, die dem zweiten Dokument einschließlich dessen Textinhalt entsprechen;
- Erzeugen einer zweiten Adressinformation, die dem zweiten Dokument entspricht, in Übereinstimmung mit der Schreibinformation; und
- Erzeugen eines zweiten Suchindexes, der dem zweiten Dokument entspricht, gemäß der zweiten Adressinformation und der Vielzahl der zweiten Schlüsselzeichenfolgen.

3. Server, der zur Kommunikation mit einer ersten Cloud-basierten Datenbank (1100; 3300) in einer ersten Cloud-Speichereinrichtung und einer zweiten Cloud-basierten Datenbank (1200; 3400) in einer zweiten Cloud-Speichereinrichtung über das Internet gemäß dem Verfahren nach Anspruch 1 oder 2 anwendbar ist, wobei der Server (1300; 3200) umfasst:
- einen Prozessor (1310), der zum Analysieren eines ersten Dokuments, das eine Textdatei oder eine Bilddatei mit Text ist, konfiguriert ist, um eine Vielzahl von ersten Schlüsselzeichenfolgen zu erhalten, die dem Textinhalt des ersten Dokuments entsprechen, wenn eine Zugriffsanweisung empfangen wird, die dem ersten Dokument entspricht, wobei der Prozessor (1310) ferner bestimmt, ob das erste Dokument eine Textdatei ist, und wobei der Prozessor (1310), wenn das erste Dokument keine Textdatei, sondern eine Bilddatei mit Text ist, einen Bilderkennungsprozess in Form einer optischen Zeichenerkennung an dem ersten Dokument durchführt, um eine Textdatei des ersten Dokuments zu erzeugen, und der Prozessor (1310) Textinhalte der erzeugten Textdatei des ersten Dokuments erfasst, um die Mehrzahl von ersten Schlüsselzeichenfolgen zu erhalten;
- eine Zugriffssteuerung (1320), die mit dem Prozessor (1310), der ersten Datenbank (1100; 3300) und der zweiten Datenbank (1200; 3400) kommuniziert und die zum Schreiben des ersten Dokuments in die erste Datenbank (1100; 3300) oder die zweite Datenbank (1200; 3400) gemäß der Zugriffsanweisung und zum Erzeugen einer ersten Adressinformation entsprechend dem ersten Dokument konfiguriert ist; wobei der Prozessor (1310) ferner einen ersten Suchindex entsprechend dem Textinhalt des ersten Dokuments mit der ersten Adressinformation und der Vielzahl von ersten Schlüsselzeichenfolgen erzeugt, wobei die Erzeugung des ersten Suchindexes mit den ersten Schlüsselzeichenfolgen auf dem Textinhalt des ersten Dokuments basiert, und
- ein nichtflüchtiges Speichermedium, das mit einer Suchdatenbank (1330) versehen ist, die zum Speichern des dem ersten Dokument entsprechenden ersten Suchindexes konfiguriert ist.

4. Server nach Anspruch 3, der ferner eine Bilderfassungsvorrichtung umfasst, die mit dem Prozessor (1310) kommuniziert und die zum Erfassen eines Bildes eines Papierdokuments verwendet wird, um das erste Dokument zu erzeugen.

5. Server nach Anspruch 3, wobei der Prozessor (1310), wenn die erste Datenbank (1100; 3300) eine Schreibinformation an den Server (1300; 3200) sendet, die einem zweiten Dokument entspricht, das eine Textdatei oder eine Bilddatei mit Text ist, bestimmt, ob das zweite Dokument durch den Prozessor (1310) in die erste Datenbank (1100; 3300) geschrieben wird, und wobei der Prozessor (1310), wenn das zweite Dokument nicht durch den Prozessor (1310) geschrieben wird, das zweite Dokument aus der ersten Datenbank (1100; 3300) über die Zugriffssteuerung (1320) erfasst, und wobei der Prozessor (1310) den Textinhalt des zweiten Dokuments analysiert, um eine Vielzahl von zweiten Schlüsselzeichenketten zu erhalten, die dem zweiten Dokument entsprechen, und wobei der Prozessor (1310) ferner eine zweite Adressinformation gemäß der Schreibinformation erzeugt und einen zweiten Suchindex erzeugt, der gemäß der zweiten Adressinformation und der Vielzahl von zweiten Schlüsselzeichenketten dem zweiten Dokument entspricht.

6. Eine Suchdatenbank (1330) in einem Server nach Anspruch 3, wobei die Datenbank Folgendes umfasst:
- ein nichtflüchtiges Speichermedium, das konfiguriert ist zum Speichern eines ersten Suchindexes, der durch ein Verfahren nach Anspruch 1 oder 2 erzeugt wurde und dem Textinhalt eines ersten Dokuments entspricht, wobei der erste Suchindex Folgendes umfasst:
- mindestens eine Schlüsselzeichenfolge, die dem Textinhalt des ersten Dokuments entspricht; und
- eine erste Adresse, die einer ersten Datenbank entspricht, in der das erste Dokument gespeichert ist;
- wobei die erste Datenbank (1100; 3300) von der Suchdatenbank (1330) verschieden ist.

7. Suchdatenbank (1330) nach Anspruch 6, wobei das nichtflüchtige Speichermedium weiterhin zum Speichern einer ersten Dateianordnungstabelle entsprechend der ersten Datenbank (1100; 3300) verwendet wird.

8. Datenbanksystem (1000), das eine erste Cloud-basierte Datenbank (1100), eine zweite Cloud-basierte Datenbank (1200) und einen Server (1300) umfasst, wobei der Server so eingerichtet ist, dass er mit der ersten Cloud-basierten Datenbank (1100; 3300) in einer ersten Cloud-Speichereinrichtung und der zweiten Cloud-basierten Datenbank (1200; 3400) in einer zweiten Cloud-Speichereinrichtung über das Internet gemäß dem Verfahren nach Anspruch 1 oder 2 kommuniziert, wobei der Server (1300; 3200) die Merkmale eines der Ansprüche 3 bis5 aufweist.

## Revendications

1. Procédé pour générer un index de recherche, applicable à un système de base de données présentant une première base de données (1100 ; 3300) dans un premier dispositif de stockage en nuage et une seconde base de données (1200 ; 3400) dans un second dispositif de stockage en nuage par un serveur (1300; 3200) communiquant avec la première base de données (1100 ; 3300) et la seconde base de données (1200 ; 3400), ledit serveur (1300 ; 3200) comprenant un support de stockage non volatil avec une base de données de recherche (1330), dans lequel le procédé comprend les étapes consistant à :
- recevoir, d'un utilisateur, une instruction d'accès correspondant à un premier document, l'instruction d'accès indiquant que le premier document doit être enregistré dans la première ou la seconde base de données ;
- analyser le premier document pour obtenir une pluralité de premières chaînes de caractères clés correspondant au premier document, y compris son contenu textuel ;
- stocker le premier document dans la première base de données (1100 ; 3300) ou la seconde base de données (1200; 3400) selon l'instruction d'accès et générer une première information d'adresse correspondant au premier document ;
- générer un premier index de recherche correspondant au premier document selon la première information d'adresse et la pluralité de premières chaînes de caractères clés ; et
- stocker l'index de recherche dans la base de données de recherche (1330), séparée des première et seconde bases de données (1100, 1200 ; 3300, 3400) ;
dans lequel l'étape consistant à analyser le premier document pour obtenir une pluralité de premières chaînes de caractères clés correspondant au contenu textuel du premier document comprend les opérations consistant à :
- lorsque le premier document est un fichier texte, capturer le contenu du fichier texte pour obtenir la pluralité de premières chaînes de caractères clés et
- lorsque le premier document est un fichier image comprenant du texte, effectuer une reconnaissance d'image sous la forme d'une reconnaissance optique de caractères sur le premier document pour générer le contenu textuel du premier document et pour obtenir la pluralité de premières chaînes de caractères clés en conséquence.

2. Procédé selon la revendication 1, comprenant en outre les étapes consistant à :
- recevoir, de la première base de données (1100 ; 3300), une information d'écriture correspondant à un second document ;
- capturer, à partir de la première base de données (1100 ; 3300), selon l'information d'écriture, le second document qui est un fichier texte ou un fichier image comprenant du texte ;
- analyser le second document pour obtenir une pluralité de secondes chaînes de caractères clés correspondant au second document, y compris son contenu textuel ;
- générer, selon l'information d'écriture, une seconde information d'adresse correspondant au second document ; et
- générer, selon la seconde information d'adresse et la pluralité de secondes chaînes de caractères clés, un second index de recherche correspondant au second document.

3. Serveur utilisable pour communiquer avec une première base de données en nuage (1100 ; 3300) dans un premier dispositif de stockage en nuage et une seconde base de données en nuage (1200 ; 3400) dans un second dispositif de stockage en nuage via Internet selon le procédé de la revendication 1 ou 2, dans lequel le serveur (1300 ; 3200) comprend :
- un processeur (1310) configuré pour analyser un premier document qui est un fichier texte ou un fichier image comprenant du texte pour obtenir une pluralité de premières chaînes de caractères clés correspondant au contenu textuel du premier document lors de la réception d'une instruction d'accès correspondant au premier document, dans lequel le processeur (1310) détermine en outre si le premier document est un fichier texte et, lorsque le premier document n'est pas un fichier texte mais un fichier image comprenant du texte, le processeur (1310) exécute un processus de reconnaissance d'image sous la forme d'une reconnaissance optique de caractères sur le premier document pour générer un fichier texte du premier document, et le processeur (1310) capture le contenu textuel du fichier texte généré du premier document pour obtenir la pluralité de premières chaînes de caractères clés ;
- un contrôleur d'accès (1320) communiquant avec le processeur (1310), la première base de données (1100 ; 3300) et la seconde base de données (1200 ; 3400), et configuré pour écrire le premier document dans la première base de données (1100 ; 3300) ou la seconde base de données (1200 ; 3400) selon l'instruction d'accès, et pour générer une première information d'adresse correspondant au premier document ; dans lequel le processeur (1310) génère en outre un premier index de recherche correspondant au contenu textuel du premier document avec la première information d'adresse et la pluralité de premières chaînes de caractères clés, dans lequel la génération du premier index de recherche avec les premières chaînes de caractères clés est basée sur le contenu textuel du premier document, et
- un support de stockage non volatil doté d'une base de données de recherche (1330), configuré pour stocker le premier index de recherche correspondant audit premier document.

4. Serveur selon la revendication 3, comprenant en outre un dispositif de capture d'image communiquant avec le processeur (1310) et utilisé pour capturer une image d'un document papier pour générer le premier document.

5. Serveur selon la revendication 3, dans lequel, lorsque la première base de données (1100 ; 3300) envoie une information d'écriture correspondant à un second document qui est un fichier texte ou un fichier image comprenant du texte au serveur (1300; 3200), le processeur (1310) détermine si le second document est écrit dans la première base de données (1100 ; 3300) par le processeur (1310) et, lorsque le second document n'est pas écrit par le processeur (1310), le processeur (1310) capture le second document à partir de la première base de données (1100 ; 3300) via le contrôleur d'accès (1320), et le processeur (1310) analyse le contenu textuel du second document pour obtenir une pluralité de secondes chaînes de caractères clés correspondant au second document, et le processeur (1310) génère en outre une seconde information d'adresse selon l'information d'écriture et génère un second index de recherche correspondant au second document selon la seconde information d'adresse et la pluralité de secondes chaînes de caractères clés.

6. Base de données de recherche (1330) dans un serveur selon la revendication 3, la base de données comprenant :
- un support de stockage non volatil configuré pour stocker un premier index de recherche généré par un procédé selon la revendication 1 ou 2 et correspondant au contenu textuel d'un premier document, dans lequel le premier index de recherche comprend :
- au moins une chaîne de caractères clé correspondant au contenu textuel dudit premier document ; et
- une première adresse correspondant à une première base de données où le premier document est stocké ;
- dans laquelle la première base de données (1100 ; 3300) est différente de la base de données de recherche (1330).

7. Base de données de recherche (1330) selon la revendication 6, dans laquelle le support de stockage non volatil est en outre utilisé pour stocker une première table d'arrangement de fichiers correspondant à la première base de données (1100 ; 3300).

8. Système de base de données (1000) comprenant une première base de données en nuage (1100), une seconde base de données en nuage (1200) et un serveur (1300), ledit serveur étant adapté à communiquer avec ladite première base de données en nuage (1100 ; 3300) dans un premier dispositif de stockage en nuage et ladite seconde base de données en nuage (1200 ; 3400) dans un second dispositif de stockage en nuage via Internet selon le procédé de la revendication 1 ou 2, dans lequel le serveur (1300 ; 3200) possède les caractéristiques de l'une des revendications 3 à 5.
